# EUROPEAN PATENT SPECIFICATION

(11) **EP 1 991 431 B1**
(45) Date of publication and mention of the grant of the patent: **21.07.2010**
(21) Application number: 06723208.2
(22) Date of filing: 03.03.2006
(51) Int. Cl.: B60C 1/00, C08K 3/34, C08L 9/00

(54) **TIRE MADE OF A CROSSLINKED ELASTOMERIC COMPOSITION**
REIFEN AUS EINER VERNETZTEN ELASTOMEREN ZUSAMMENSETZUNG
PNEUMATIQUE EN COMPOSITION ÉLASTOMÈRE RÉTICULABLE

(43) Date of publication of application: 19.11.2008
(73) Proprietor: PIRELLI TYRE S.p.A., 20126 Milano (IT); Politecnico Di Milano, 20133 Milano (IT)
(72) Inventor: GALIMBERTI, Maurizio, I-20126 Milano (IT); SPERA, Clementina, I-20126 Milano (IT); CITTERIO, Attilio, I-20131 Milano (IT)
(74) Representative: Longoni, Alessandra
(86) International application number: PCT/EP2006/001965
(87) International publication number: WO 2007/098784

(56) References cited:
- EP-A- 1 090 954
- EP-A- 1 518 895
- WO-A-00/34376
- WO-A-2004/005388
- WO-A-2004/063260
- WO-A-2005/118695
- US-A- 5 334 241
- US-A1- 2003 162 877
- HEIDEMAN G ET AL: "MODIFIED CLAYS AS ACTIVATOR IN SULPHUR VULCANISATION A NOVEL APPROACH TO REDUCE ZINC OXIDE LEVELS IN RUBBER COMPOUNDS MODIFIZIERTE SCHICHTSILIKATE ALS AKTIVATOREN BEI DER SCHWEFELVULKANISATION: EIN NEUER ANSATZ ZUR REDUZIERUNG DES ZINKOXID-GEHALTES IN G" KAUTSCHUK UND GUMMI - KUNSTSTOFFE, HUTHIG VERLAG, HEIDELBERG, DE, vol. 56, no. 12, December 2003 (2003-12), pages 650-652,654, XP001201465 ISSN: 0948-3276

## Description

The present invention relates to a tire made of a crosslinked elastomeric composition.

More in particular, the present invention relates to a tire comprising at least one structural element including a crosslinked elastomeric material obtained by crosslinking a crosslinkable elastomeric composition comprising at least one diene elastomeric polymer and at least one activator obtained by dry comilling a mixture comprising at least one salt, or one oxide, or one hydroxide of a metal belonging to groups 2 to 16 of the Periodic Table of the Elements, and at least one nanosized layered material.

Furthermore, the present invention also relates to a tread band including a crosslinkable elastomeric composition comprising at least one diene elastomeric polymer and at least one activator obtained by dry comilling a mixture comprising at least one salt, or one oxide, or one hydroxide of a metal belonging to groups 2 to 16 of the Periodic Table of the Elements, and at least one nanosized layered material.

Processes for vulcanizing diene elastomeric polymers with sulfur are widely used in the rubber industry for the production of a wide range of manufactured products, and in particular of tires. Although these processes lead to the production of high-quality vulcanized products, they include considerable complexity mainly linked to the fact that, in order to obtain an optimum vulcanization in industrially acceptable times, it is necessary to use a complex vulcanizing system which includes, in addition to sulfur, one or more activators such as, for example, heavy metal compounds, such as, for example, zinc compounds, and in particular ZnO, ZnCO₃, ZnCO₃.2Zn(OH)₂.H₂O, ZnCl₂, zinc salts of fatty acids such as, for example, zinc stearate, and one or more accelerators such as, for example, thiazoles, dithiocarbamates, thiurams, guanidine, sulphenamides. The presence of these products may, in some cases, entail considerable problems as regards the harmfulness/toxicity both when being produced and when in use, in particular when the vulcanized manufactured products are intended for medical-health or food use.

Zinc compounds, in particular zinc oxide, usually in combination with fatty acids such as, for example, stearic acid, are usually used in the production of crosslinkable elastomeric compositions which may be used in the manufacturing of tires. Due to the abrasion two which tires are usually subjected, fine particles of crosslinked elastomeric composition, in particular of the crosslinked elastomeric composition included in a tire tread band, are dispersed in the environment so causing seriuos pollution problems. It is in fact known that zinc has a harmful effect on microorganisms.

In this respect, a number of attempts have been made directed towards reducing or eliminating the amount of said heavy metal compounds, in particular of zinc compounds, from crosslinkable elastomeric compositions.

For example, International Patent Application WO 00/37267 in the name of the Applicant relates to a crosslinkable elastomeric composition that is particularly useful, for producing tire tread bands, comprising: (a) a polymer base containing a crosslinkable unsaturated chain; (b) a vulcanizing system including:
(b1) an amount of between 0.5 phr and 2 phr of sulfur,
(b2) an amount of between 1.5 phr and 7 phr of at least one vulcanization accelerator containing at least one carbon atom linked to at least two sulfur atoms, (b3) an amount of not greater than 2 phr, expressed in terms of zinc oxide equivalents, of at least one activator. Although reducing the amount of activator, it would thus be possible to obtain a tire with improved wear resistance capable of maintaining unchanged its characteristic properties of wet road holding and of rolling resistance.

"International Polymer Science and Technology" (1994), Vol. 21, No. 7, pp. 48-51 relates to the possibility of reducing the amount of zinc oxide in crosslinkable elastomeric compositions. To this end, a complex which consists of zinc oxide / sulfur / stearic acid / 2-mercaptobenzothiazole/ tetramethylthiuram disulphide is added to said compositions instead of the mechanical mixture of said products that is normally used. In this way, an increase in the rate of vulcanization and a reduction in the vulcanization induction time at low temperatures are said to be achieved.

United States .Patent US 3,856,729 relates to a crosslinkable elastomeric composition comprising a butadiene rubber, sulfur and an activator, **characterized in that** the sulfur and the activator are present in an amount of between 0.1 phr and 0.8 phr, preferably between 0.1 phr and 0.6 phr, and between 0.1 phr arid 1.0 phr, preferably between 0.1 phr and 0.5 phr, respectively. Said amounts are appreciably lower than the amounts normally used. The crosslinked manufactured product obtained is said to have good tear strength, good resistance to elongation and good resistance to ageing.

United States Patent US 3,451,458 relates to a sulfur-crosslinkable elastomeric composition that is particularly useful for preparing tire tread bands, comprising a synthetic diene rubber and silica, said composition being substantially free of activators based on metal oxides, and in particular zinc oxide. The absence of zinc oxide is said to make it possible thereby to obtain tires with good tensile strength and good wear resistance.

International Patent Application WO 2004/052981 relates to a method for vulcanizing a rubber compound, wherein the rubber compound, under heating, in the presence of sulfur or a sulfur-containing compound, and a vulcanization accelerator, is contacted with an activator comprising a support material loaded with Ba, Pd, Cd, Ca, Mg and/or Zn ions, preferably Zn ions, provided on the support through an ion exchange process with a metal ion-containing solution. Preferably, the support material is said to be a clay such as, for example, halloysite, illite, kaolinite, bentonite, phyllosilicate and/or palygorskite-like clays. The abovementioned activator is said to allows the zinc content of the rubbber compound to be reduced by a factor of 20 if the activator is loaded with Zn ions, or to allows the zinc to be replaced with other metals if the activator is loaded with different metal ions, without negatively affected the mechanical and physical properties of the vulcanized rubber compund.

In EP 1 518 895 A, a pneumatic rubber tire having at least one component of a polybutadiene-rich rubber composition comprised of a blend of a continuous phase of a specialized cis 1,4-polybutadiene rubber and a dispersed phase comprised of a composite of styrene/butadiene elastomer which contains a dispersion of at least partially exfoliated, intercalated, clay platelets, wherein said cis 1,4-polybutadiene rubber and styrene/butadiene elastomer have spatially defined glass transition temperatures, wherein said blend contains amorphous silica and carbon black reinforcement. Such tire component may be, for example, a circumferential tread having a running surface intended to be ground-contacting or a sidewall insert.

US2003/162877 A1 refers to a method for preparing organoclays for use as rheological control agents and in the preparation of nanocomposites. Typically, the clay is dispersed in water, and a specific amount of polymeric hydrotrope, ranging from 0.1 to 15 weight percent relative to the weight of the clay, is adsorbed onto the clay surface. Quaternary amine exchange is also performed on the clay to modify the surface hydrophilic/lipophilic balance (HLB) of the clay.

In the Applicant's view, crosslinkable elastomeric compositions in which the amount of heavy metal compounds, in particular of zinc compounds, is reduced, or even eliminated, must satisfy a number of requirements in order to make them advantageously useful in the production of crosslinked manufactured products, and in particular of tires. As a matter of fact, the reduction or elimination of heavy metal compounds, in particular of zinc compounds, must not compromise the fundamental properties of the obtained crosslinked manufactured product, such as their mechanical properties (both static and dynamic), not to mention their abrasion resistance. In addition, said reduction or elimination should not have a negative impact on the vulcanization times, which could become unacceptable from the point of view of industrial production.

The Applicant has now found that it is possible to obtain crosslinkable elastomeric compositions substantially free of heavy metal compounds, in particular of zinc compounds, which may be advantageously used in the production of crosslinked manufactured products, in particular in the manufacturing of tires, by adding to the crosslinkable elastomeric compositions at least one activator obtained by dry comilling a mixture comprising at least one salt, or one oxide, or one hydroxide of a metal belonging to groups 2 to 16 of the Periodic Table of the Elements, and at least one nanosized layered material.

The addition of said at least one activator makes it possible to obtain, even in the substantial absence of heavy metal compounds, in particular of zinc compounds, a crosslinked manufactured product that has good mechanical properties (both static and dynamic), while maintaining acceptable vulcanization times. In addition, improved abrasion resistance has been found.

According to a first aspect, the present invention relates to a tire, comprising at least one structural element including a crosslinked elastomeric material obtained by crosslinking a crosslinkable elastomeric composition comprising:
(a) at least one diene elastomeric polymer;
(b) at least one activator obtained by dry comilling a mixture comprising:
   - at least one salt, or one oxide, or one hydroxide of a metal belonging to groups 2, 3, 4, 5, 6, 7, 8, 9, 10, 11, 12, 13, 14, 15, or 16 of the Periodic Table of the Elements; and
   - at least one layered material, said layered material having an individual layer thickness of from 0.01 nm to 30 nm, preferably of from 0.05 nm to 15 nm, more preferably of from 0.1 nm to 2 nm;
(c) at least one vulcanization accelerator;
(d) sulfur or derivatives thereof.

According to a further preferred embodiment, the tire comprises:
- a carcass structure of a substantially toroidal shape, having opposite lateral edges associated with respective right-hand and left-hand bead structures, said bead structures comprising at least one bead core and at least one bead filler;
- a belt structure applied in a radially external position with respect to said carcass structure;
- a tread band radially superimposed on said belt structure;
- a pair of sidewalls applied laterally on opposite sides with respect to said carcass structure;
wherein said structural element is the tread band.

According to a further aspect, the present invention relates to a tire tread band including a crosslinkable elastomeric composition comprising:
(a) at least one diene elastomeric polymer;
(b) at least one activator obtained by dry comilling a mixture comprising:
   - at least one salt, or one oxide, or one hydroxide of a metal belonging to groups 2, 3, 4, 5, 6, 7, 8, 9, 10, 11, 12, 13, 14, 15, or 16 of the Periodic Table of the Elements; and
   - at least one layered material, said layered material having an individual layer thickness of from 0.01 nm to 30 nm, preferably of from 0.05 nm to 15 nm, more preferably of from 0.1 nm to 2 nm;
(c) at least one vulcanization accelerator;
(d) sulfur or derivatives thereof.

The tire of the present invention is made from a crosslinkable elastomeric composition comprising:
(a) at least one diene elastomeric polymer;
(b) at least one activator obtained by dry comilling a mixture comprising:
   - at least one salt, or one oxide, or one hydroxide of a metal belonging to groups 2, 3, 4, 5, 6, 7, 8, 9, 10, 11, 12, 13, 14, 15, or 16 of the Periodic Table of the Elements; and
   - at least one layered material, said layered material having an individual layer thickness of from 0.01 nm to 3.0 nm, preferably of from 0.05 nm to 15 nm, more preferably of from 0.1 nm to 2 nm;
(c) at least one vulcanization accelerator;
(d) sulfur or derivatives thereof.

According to one preferred embodiment, said at least one activator (b) may be obtained by dry comilling a mixture comprising:
- at least one salt, or one oxide, or one hydroxide of a metal belonging to groups 2, 3, 4, 5, 6, 7, .8, 9, 10, 11, 12, 13, 14, 15, or 16 of the Periodic Table of the Elements;
- at least one layered material, said layered material having an individual layer thickness of from 0.01 nm to 30 nm, preferably of from 0.05 nm to 15 nm, more preferably of from 0.1 nm to 2 nm; and
- at least one alkyl ammonium or alkyl phosphonium salt.

According to a further preferred embodiment, said at least one activator (b) may be obtained by dry comilling a mixture comprising:
- at least one salt, or one oxide, or one hydroxide of a metal belonging to groups 2, 3, 4, 5, 6, 7, 8, 9, 10, 11, 12, 13, 14, 15, or 16 of the Periodic Table of the Elements; and
- at least one layered material modified with at least one alkyl ammonium or alkyl phosphonium salt, said layered material having an individual layer thickness of from 0.01 nm to 30 nm, preferably of from 0.05 nm to 15 nm, more preferably of from 0.1 nm to 2 nm.

According to one preferred embodiment, said crosslinkable elastomeric composition is substantially free of heavy metal compounds, in particular of zinc compounds.

For the purposes of the present description and of the claims which follow, the expression "substantially free of heavy metal compounds" means that said crosslinkable elastomeric composition comprises an amount of heavy metal compounds such that the amount of heavy metals present in said crosslinkable elastomeric composition is of from 0 phr to 0.2 phr, preferably of from 0.01 phr to 0.15 phr. In particular, said crosslinkable elastomeric composition is substantially free of heavy metal compounds which are usually used as activators in sulfur-crosslinkable elastomeric compositions, such as, for example: zinc compounds, in particular, ZnO, ZnCO₃, ZnCO₃.2Zn(OH)₂.H₂O, ZnCl₂, zinc salts of saturated or unsaturated fatty acids containing from 8 to 18 carbon atoms, such as, for example, zinc stearate, zinc octanoate, said zinc salts being optionally formed in situ in the elastomeric composition from ZnO and fatty acid. In addition, said crosslinkable elastomeric composition is substantially free of other toxic and/or harmful heavy metal compounds such as, for example, Bi₂O₃, CdO, HgO, PbO, Pb₃O₄, PbO₂, or mixtures thereof.

For the purposes of the present description and of the claims which follow, the term "phr" means the parts by weight of a given component of the crosslinkable elastomeric composition per 100 parts by weight of elastomeric polymer(s).

For the purpose of the present description and of the claims which follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

It should be pointed out that, for the purposes of the present description and of the claims which follow, the references to the Periodic Table of the Elements refer to the IUPAC Periodic Table of the Element, version dated 3 October 2005, reported at the following Internet site: www.iupac.org/reports/periodic_table.

It should also be pointed out that, for the purposes of the present description and of the claims which follow, the expression "metal belonging to groups 2, 3, 4, 5, 6, 7, 8, 9, 10, 11, 12, 13, 14, 15, or 16 of the Periodic Table of the Elements" also means metals belonging to the lanthanide series and the actinide series.

According to one preferred embodiment, said metal belonging to groups 2, 3, 4, 5, 6, 7, 8, 9, 10, 11, 12, 13, 14, 15, or 16 of the Periodic Table of the Elements, may be selected from:
- alkaline-earth metals such as, for example, calcium, magnesium, or mixtures thereof;
- transition metals such as, for example, zinc, cobalt, nickel; iron, molybdenum, manganese, chromium, cerium, or mixtures thereof; zinc is particualrly preferred;
- main group metals such as, for example, tin, antimony, or mixtures thereof;
or mixtures thereof.

According to one preferred embodiment, said diene elastomeric polymer (a) may be selected from those commonly used in sulfur-crosslinkable elastomeric compositions, that are particularly suitable for producing tires, that is to say from elastomeric polymers or copolymers with an unsaturated chain having a glass transition temperature (T_{g}) generally below 20°C, preferably in the range of from 0°C to -110°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers. Preferably, the obtained polymers or copolymers contain said at least one comonomer selected from monovinylarenes and/or polar comonomers in an amount of not more than 60% by weight.

The conjugated diolefine generally contain from 4 to 12, preferably from 4 to 8 carbon atoms, and may be selected, for example, from: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene or isoprene are particularly preferred.

Monovinylarenes which may optionally be used as comonomers generally contain from 8 to 20, preferably from 8 to 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, said diene elastomeric polymer (a) may be selected, for example, from: cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

The above reported crosslinkable elastomeric composition may optionally comprise (a') at least one elastomeric polymer of one or more monoolefins with an olefinic comonomer or derivatives thereof. The monoolefins may be selected, for example, from: ethylene and α-olefins generally containing from 3 to 12 carbon atoms, such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

The above reported elastomeric polymers, i.e. the diene elastomeric polymer (a) and the elastomeric polymer (a'), may optionally be functionalized by reaction with suitable terminating agents or coupling agents. In particular, the diene elastomeric polymers obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European Patent EP 451,604, or United States Patents US 4,742,124, or US 4,550,142).

The above reported elastomeric polymers, i.e. the diene elastomeric polymer (a) and the elastomeric polymer (a'), may optionally include at least one functional group which may be selected, for example, from: carboxylic groups, carboxylate groups, anhydride groups, ester groups, epoxy groups, or mixtures thereof.

According to one preferred embodiment, said salt of a metal belonging to groups 2, 3, 4, 5, 6, 7, 8, 9, 10, 11, 12, 13, 14, 15 or 16 of the Periodic Table of the Elements, may be selected, for example, from organic or inorganic metal salts, or mixtures thereof.

Organic metal salts that may be advantageously used in the present invention may be selected, for example, from the salts of: saturated or unsaturated, aliphatic, alicyclic or aromatic monocarboxylic or dicarboxylic acids containing from 1 to 22 carbon atoms; sulphonic acids; phosphonic acids; boric acids; or mixtures thereof. Saturated or unsaturated, aliphatic or aromatic carboxylic acid salts are preferred.

Specific examples of aliphatic carboxylic acids that may be advantageously used in the present invention are: formic acid, acetil acetic acid, acetic acid, propionic acid, butyric acid, lauric acid, lactic acid, heptanoic acid, ethylhexanoic acid, octanoic acid or neodecanoic acid; or fatty acids such as, for example, stearic acid, oleic acid, linoleic acid, palmitic acid, or mixtures thereof.

Specific examples of aromatic carboxylic acids that may be advantageously used in the present invention are: benzoic acid, naphthoic acid, phthalic acid, p-phenylenediacetic acid, or mixtures thereof.

The abovementioned organic metal salts may also be formed in situ in the crosslinkable elastomeric composition from the oxide or hydroxide of the metal and from the carboxylic acid.

According to one preferred embodiment, said organic metal salts may be selected, for example, from: zinc octanoate, zinc stearate, zinc naphtenate, cobalt naphthenate, nickel naphthenate, nickel octanoate, cerium octanoate, molybdenum octanoate, cobalt propionate, nickel propionate, iron octanoate, nickel stearate, magnesium stearate, magnesium acetate, magnesium acetilacetonate, calcium stearate, calcium laurate, calcium stearoyl-lactate, or mixtures thereof. Zinc octanoate is particularly preferred.

Inorganic metal salts that may be advantageously used in the present invention may be selected, for example, from: halides, chlorides, sulphates, carbonates, phosphates, nitrates, or mixtures thereof.

According to one preferred embodiment, said inorganic metal salts may be selected, for example, from: zinc chloride, cobalt carbonate, zinc carbonate hydroxide hydrate, iron carbonate, lead carbonate, magnesium methyl carbonate, magnesium ethyl carbonate, magnesium isopropyl carbonate, iron sulphate, or mixtures thereof. Zinc chloride is particularly preferred.

According to one preferred embodiment, said oxide of a metal belonging to groups 2, 3, 4, 5, 6, 7, 8, 9, 10, 11, 12, 13, 14, 15, or 16 of the Periodic Table of the Elements, may be selected, for example, from: calcium oxide, magnesium oxide, zinc oxide, cobalt oxide, cerium oxide, molybdenum oxide, manganese oxide, iron oxide, or mixtures thereof. Zinc oxide, magnesium oxide, or mixture thereof are particularly preferred. Zinc oxide is still particularly preferred.

According to one preferred embodiment, said hydroxide of a metal belonging to groups 2, 3, 4, 5, 6, 7, 8, 9, 10, 11, 12, 13, 14, 15, or 16 of the Periodic Table of the Elements, may be selected, for example, from: zinc hydroxide, cobalt hydroxide, magnesium hydroxide, calcium hydroxide, or mixtures thereof. Zinc hydroxide is particularly preferred.

Said at least one salt, or one oxide, or one hydroxide of a metal belonging to groups 2, 3, 4, 5, 6, 7, 8, 9, 10, 11, 12, 13, 14 15, or 16 of the Periodic Table of the Elements may be comilled with said at least one layered material as such, or as a suitable mixture with an inert filler such as, for example, silica.

According to one preferred embodiment, said layered material may be selected, for example, from: phyllosilicates such as, smectites, for example, montmorillonite, bentonite, nontronite, beidellite, volkonskoite, hectorite, saponite, sauconite; vermiculite; halloisite; sericite; aluminate oxides; hydrotalcite; or mixtures thereof. Montmorillonite, bentonite are particularly preferred. These layered material generally contains exchangeable ions such as sodium (Na⁺), calcium (Ca²⁺), potassium (K⁺), magnesium (Mg²⁺), hydroxide (HO⁻), or carbonate (CO₃²⁻), present at the interlayer surfaces.

Example of layered materials which may be used according to the present invention and are available commercially are the products known by the name of Cloisite^{®} Na⁺, from Southern Clay Products; or Bentonite^{®} AG/3 from Dal Cin S.p.A.; or Dellite^{®} HPS from Laviosa Chimica Mineraria S.p.A.

According to one preferred embodiment, said activator (b) is present in the crosslinkable elastomeric composition in an amount of from 1 phr to 8 phr, preferably of from 1.5 phr to 5 phr.

According to a further preferred embodiment, said activator (b) is present in the crosslinkable elastomeric composition in an amount such that the amount of metal present in said crosslinkable elastomeric composition is of from 0.01 phr to 1.0 phr, preferably of from 0.02 phr to 0.5 phr.

According to one preferred embodiment, said vulcanization accelerator (c) may be selected, for example, from:
- thiazoles such as, for example, 2-mercaptobenzothiazole (MBT), the zinc salt of 2-mercaptobenzothiazole (ZMBT), 2-mercaptobenzothiazole disulphide (MBTS), 2,4-dinitrophenylmercaptobenzothiazole, or mixtures thereof;
- sulphenamides such as, for example, N-cyclohexyl-2-benzothiazylsulphenamide (CBS), N-oxydiethylene-2-benzothiazylsulphenamide (OBS), N-t-butyl-2-benzothiazylsulphenamide (TBBS), N,N-dicyclohexyl-2-benzothiazylsulphenamide (DCBS), or mixtures thereof;
- guanidines such as, for example, diphenylguanidine (DPG), di-o-tolylguanidine (DOTG), o-tolylbiguanide (OTBG), or mixtures thereof;
- thiurams such as, for example, thiuram monosulphides [for example, tetramethylthiuram monosulphide (TMTM)], thiuram disulphides [for example, tetramethylthiuram disulphide (TMT or TMTD), tetraethylthiuram disulphide (TETD), tetrabutylthiuram disulphide (TBTD or TBTS), dimethyldiphenylthiuram disulphide (MPTD), diethyldiphenylthiuram disulphide (EPTD)], thiuram tetrasulphides (for example, pentamethylenethiuram tetrasulphide), thiuram hexasulphides (for example, pentamethylenethiuram hexasulphide), or mixtures thereof;
- dithiocarbamates such as, for example, zinc N-dimethyldithiocarbamate (ZDMC), zinc N-diethyldithiocarbamate (ZDEC), zinc N-dibutyldithiocarbamate (ZDBC), zinc N-ethylphenyldithiocarbamate (ZEPC), zinc N-pentamethylenedithiocarbamate (ZCMC), zinc N-dibenzyldithiocarbamate (ZBEC), tellurium N-diethyldithiocarbamate (Te DEC or TDEC), selenium N-diethyldithiocarbamate (Se DEC), cadmium N-diethyldithiocarbamate (Cd DEC), copper N-diethyldithiocarbamate (Cu DEC), lead N-diethyldithiocarbamate (LDMC), lead N-diamyldithiocarbamate (LDAC), bismuth N-dimethyldithiocarbamate (Bi DMC), piperidine N-pentamethylenedithiocarbamate (PPC), or mixtures thereof;
- Schiff's bases and other amino accelerators such as, for example, products of condensation between homologous acroleins with aromatic bases, butyraldehyde-aniline (BAA) condensation products, tricrotonylidenetetramine (TLT), cyclohexylethylamine (CEA), polyethylenepolyamine (PEP), hexamethylenetetramine (HEXA), or mixtures thereof;
- xanthates such as, for example, zinc isopropyl xanthate (ZIX), zinc butyl xanthate (ZBX), sodium isopropyl xanthate (NaIX), disulphidedibutyl xanthate (DBX), or mixtures thereof;
or mixture thereof.

According to one preferred embodiment, said vulcanization accelerator (c) is present in the crosslinkable elastomeric composition in an amount of from 0.5 phr to 5 phr, preferably of from 1 phr to 3 phr.

According to one preferred embodiment, said sulfur or derivatives thereof (d) may be selected from:
- soluble sulfur (crystalline sulfur);
- insoluble sulfur (polymeric sulfur);
- sulfur dispersed in oil (for example 33% sulfur known under the trade name Crystex^{®} OT33 from Flexsys);
- sulfur donors such as, for example, tetramethylthiuram disulphide (TMTD), tetrabenzylthiuram disulphide (TBzTD), tetraethylthiuram disulphide (TETD), tetrabutylthiuram disulphide (TBTD), dimethyldiphenylthiuram disulphide (MPTD), pentamethylenethiuram tetrasulphide or hexasulphide (DPTT), morpholinobenzothiazole disulphide (MBSS), N-oxydiethylenedithiocarbamyl-N'-oxydiethylenesulphenamide (OTOS), dithiodimorpholine (DTM or DTDM), caprolactam disulphide (CLD); or mixtures thereof;
or mixtures thereof.

According to one preferred embodiment, said sulfur or derivatives thereof (c) is present in the crosslinkable elastomeric composition in an amount of from 0.5 phr to 5 phr, preferably of from 1 phr to 3 phr.

As disclosed above, said at least one activator (b) may be obtained by dry comilling a mixture comprising at least one salt, or one oxide, or one hydroxide of a metal belonging to groups 2 to 16 of the Periodic Table of the Elements, at least one nanosized layered material, and at least one alkyl ammonium or alkyl phosphonium salt.

Alternatively, as disclosed above, said at least one activator (b) may be obtained by dry comilling a mixture comprising at least one salt, or one oxide, or one hydroxide of a metal belonging to groups 2 to 16 of the Periodic Table of the Elements, and at least one layered material modified with at least one alkyl ammonium or alkyl phosphonium salt.

According to one preferred embodiment, said alkyl ammonium or alkyl phosphonium salt may be selected, for example, from quaternary ammonium or phosphonium salts having general formula (I): 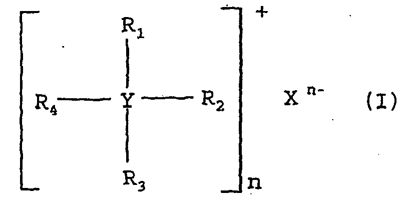 wherein:
- Y represents N or P;
- R₁, R₂, R₃ and R₄, which may be equal or different from each other, represent a linear or branched C₁-C₂₀ alkyl or hydroxyalkyl group; a linear or branched C₁-C₂₀ alkenyl or hydroxyalkenyl group; a group -R₅-SH or -R₅-NH wherein R₅ represents a linear or branched C₁-C₂₀ alkylene group; a C₆-C₁₈ aryl group; a C₇-C₂₀ arylalkyl or alkylaryl group; a C₅-C₁₈ cycloalkyl group, said cycloalkyl group possibly containing hetero atom such as oxygen, nitrogen or sulfur;
- Xⁿ⁻ represents an anion such as the chloride ion, the sulphate ion or the phosphate ion;
- n represents 1, 2 or 3.

Said alkyl ammonium or alkyl phosphonium salt is capable of undergoing ion exchange reactions with the ions which, as already disclosed above, are present at the interlayers surfaces of the layered materials.

In the case of using a layered material modified with at least one alkyl ammonium or alkyl phosphonium salt, its modification may be carried out by treating said layered material with at least one alkyl ammonium or alkyl phosphonium salt before adding it to the elastomeric polymers.

The treatment of the layered material with the at least one alkyl ammonium or alkyl phosphonium salt may be carried out according to known methods such as, for example, by an ion exchange reaction between the layered material and the at least one alkyl ammonium or alkyl phosphonium salt: further details about said treatment may be found, for example, in United States Patents US 4,136,103, US 5,747,560, or US 5,952,093.

Examples of layered materials modified with at least one alkyl ammonium or alkyl phosphonium salt which may be used according to the present invention and are available commercially are the products known by the name of Dellite^{®} 67G, Dellite^{®} 72T, Dellite^{®} 43B, from Laviosa Chimica Mineraria S.p.A.; Cloisite 25A, Cloisite^{®} 10A, Cloisite^{®} 15A, Cloisite^{®} 20A, from Southern Clay Products; Nanofil^{®} 5, Nanofil^{®} 8, Nanofil^{®} 9, from Süd Chemie.

As disclosed above, said at least one activator (b) is obtained by dry comilling.

For the purposes of the present invention and of the claims which follow, the expression "dry comilling" means that the comilling is carried out in substantial absence of any liquid components such as, for example, water, solvents, or mixtures thereof (i.e., if present, said liquid components are present in an amount lower than 10% by weight with respect to the total weight of the mixture to be comilled).

According to one preferred embodiment, said at least one activator (b) is obtained by dry comilling a mixture comprising:
- from 1% by weight to 65% by weight, preferably from 3% by weight to 35%, of at least one salt, or one oxide, or one hydroxide of a metal belonging to groups 2, 3, 4, 5, 6, 7, 8, 9, 10, 11, 12, 13, 14, 15, or 16 of the Periodic Table of the Elements;
- from 35% by weight to 99% by weight, preferably from 65% by weight to 97% by weight, of at least one layered material, said layered material having an individual layer thickness of from 0.01 nm to 30 nm, preferably of from 0.05 nm to 15 nm, more preferably of from 0.1 nm to 2 nm, said layered material being optionally modified with at least one alkyl ammonium or alkyl phosphonium salt;
- from 0% by weight to 50% by weight, preferably from 2% by weight to 30%, of at least one' alkyl ammonium or alkyl phosphonium salt;
said % by weight being expressed with respect to the total weight of the obtained activator (b).

According to one preferred embodiment, said comilling is carried out at a temperature of from -100°C to 60°C, preferably of from 0°C to 50°C, for a time of from 20 min to 7 hours, preferably of from 1 hour to 3 hours.

Any conventional grinder or milling devices which is capable of providing sufficient energy to effect fracture of the compounds to be comilled may be used according to the present invention. Preferably, a centrifugal ball-mill is used.

According to one preferred embodiment, said activator (b) contains an amount of metal of from 0.5% by weight to 20% by weight, preferably of from 2% by weight to 15% by weight, with respect to the total weight of the activator (b).

Said metal amount may be determined according to known techniques such as, for example, Induction Coupled Plasma-Atomic Emission Spectroscopy (ICP-AES): further details regarding to said technique will be found in the examples which follow.

At least one reinforcing filler may advantageously be added to the crosslinkable elastomeric composition above disclosed, in an amount generally of from 0 phr to 120 phr, preferably of from 10 phr to 90 phr. The reinforcing filler may be selected from those commonly used for crosslinked manufactured products, in particular for tires, such as, for example, carbon black, silica, alumina, aluminosilicates, calcium carbonate, kaolin, or mixtures thereof.

The types of carbon black which may be used according to the present invention may be selected from those conventionally used in the production of tires, generally having a surface area of not less than 20 m²/g (determined by CTAB absorption as described in ISO standard 6810).

The silica which may be used according to the present invention may generally be a pyrogenic silica or, preferably a precipitated silica, with a BET surface area (measured according to ISO standard 5794/1) of from 50 m²/g to 500 m²/g, preferably of from 70 m²/g to 200 m²/g.

When a reinforcing filler comprising silica is present, the crosslinkable elastomeric composition may advantageously incorporate a coupling agent capable of interacting with the silica and of linking it to the elastomeric base during the vulcanization.

Coupling agents that are preferably used are those based on silane which may be identified, for example, by the following structural formula (II) :

(R)₃Si-CₙH₂ₙ-X (II)

wherein the groups R, which may be equal or different from each other, are selected from: alkyl, alkoxy or aryloxy groups or from halogen atoms, on condition that at least one of the groups R is an alkoxy or aryloxy group; n is an integer of from 1 to 6, extremes included; X is a group selected from: nitroso, mercapto, amino, epoxide, vinyl, imide, chloro, -(S)ₘCₙH₂ₙ-Si-(R₅)₃, or -S-COR₅, in which m and n are integers of from 1 to 6, extremes included and the groups R₅ are defined as above.

Among the silane coupling agents that are particularly preferred are bis(3-triethoxysilylpropyl)tetrasulphide or bis(3-triethoxysilylpropyl)-disulphide. Said coupling agents may be used as such or as a suitable mixture with an inert filler (for example carbon black) so as to facilitate their incorporation into the elastomeric polymer.

According to one preferred embodiment, said silane coupling agent is present in the crosslinkable elastomeric composition in an amount of from 0 phr to 10 phr, preferably of from 0.5 phr to 5 phr.

The crosslinkable elastomeric composition used in the tire of the present invention may be vulcanized according to known techniques. To this end, in the composition, after a first stage of thermomechanical processing, a sulfur-based vulcanizing agent is incorporated together with vulcanization accelerators. In this second processing stage, the temperature is generally kept below 120°C, preferably below 100°C, so as to avoid any unwanted pre-crosslinking phenomena.

The crosslinkable elastomeric composition may comprise other commonly used additives selected on the basis of the specific application for which the composition is intended. For example, the following may be added to said composition: antioxidants, anti-ageing agents, plasticizers, adhesives, anti-ozone agents, modifying resins, fibres (for example Kevlar^{®} pulp), or mixtures thereof.

In particular, for the purpose of further improving the processability, a plasticizer generally selected from mineral oils, vegetable oils, synthetic oils, or mixtures thereof, such as, for example, aromatic oil, naphthenic oil, phthalates, soybean oil, or mixtures thereof, may be added to the elastomeric composition according to the present invention. The amount of plasticizer can generally range from 2 phr to 100 phr and preferably from 5 phr to 50 phr.

The crosslinkable elastomeric composition may be prepared by mixing together the polymer components with the reinforcing filler optionally present and with the other additives according to techniques known in the art. The mixing may be carried out, for example, using an open mixer of openmill type, or an internal mixer of the type with tangential rotors (Banbury) or with interlocking rotors (Intermix), or in continuous mixers of Ko-Kneader type (Buss) or of co-rotating or counter-rotating twin-screw type.

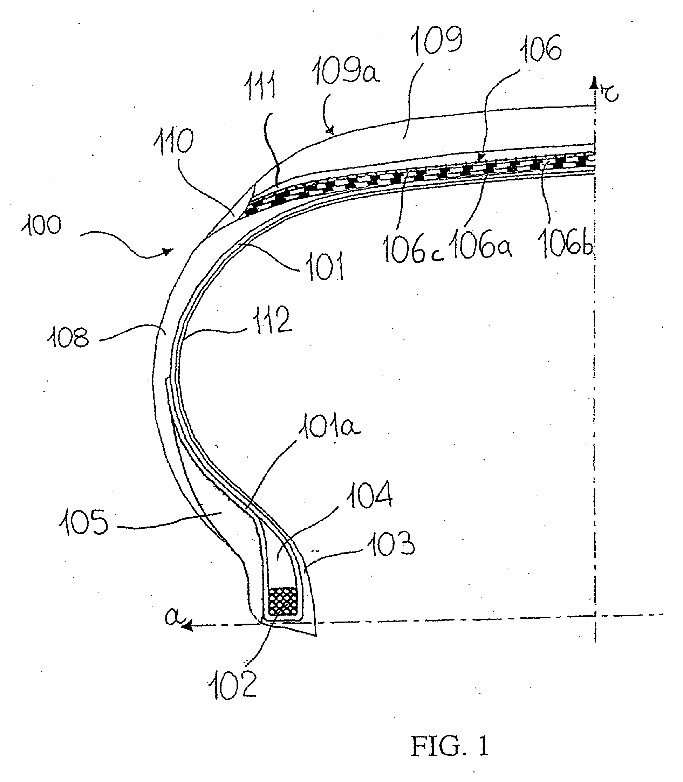

The present invention will now be illustrated in further detail by means of a illustrative embodiment, with reference to the attached Fig. 1, which is a view in cross section of a portion of a tire made according to the invention.

"a" indicates an axial direction and "r" indicates a radial direction. For simplicity, Fig. 1 shows only a portion of the tire, the remaining portion not represented being identical and symmetrically arranged with respect to the radial direction "r".

The tire (100) comprises at least one carcass ply (101), the opposite lateral edges of which are associated with respective bead structures comprising at least one bead core (102) and at least one bead filler (104). The association between the carcass ply (101) and the bead core (102) is achieved here by folding back the opposite lateral edges of the carcass ply (101) around the bead core (102) so as to form the so-called carcass back-fold (101a) as shown in Fig. 1.

Alternatively, the conventional bead core (102) may be replaced with at least one annular insert formed from rubberized wires arranged in concentric coils (not represented in Fig. 1) (see, for example, European Patent Applications EP 928, 680 or EP 928,702, both in the name of the Applicant). In this case, the carcass ply (101) is not back-folded around said annular inserts, the coupling being provided by a second carcass ply (not represented in Fig. 1) applied externally over the first.

The carcass ply (101) generally consists of a plurality of reinforcing cords arranged parallel to each other and at least partially coated with a layer of a crosslinked elastomeric composition. These reinforcing cords are usually made of textile fibres, for example rayon, nylon or polyethylene terephthalate, or of steel wires stranded together, coated with a metal alloy (for example copper/zinc, zinc/manganese, zinc/molybdenum/cobalt alloys and the like).

The carcass ply (101) is usually of radial type, i.e. it incorporates reinforcing cords arranged in a substantially perpendicular direction relative to a circumferential direction. The bead core (102) is enclosed in a bead (103), defined along an inner circumferential edge of the tire (100), with which the tire engages on a rim (not represented in Fig. 1) forming part of a vehicle wheel. The space defined by each carcass back-fold (101a) contains a bead filler (104) wherein the bead core (102) is embedded. An antiabrasive strip (105) is usually placed in an axially external position relative to the carcass back-fold (101a).

A belt structure (106) is applied along the circumference of the carcass ply (101). In the particular embodiment in Fig. 1, the belt structure (106) comprises two belt strips (106a, 106b) which incorporate a plurality of reinforcing cords, typically metal cords, which are parallel to each other in each strip and intersecting with respect to the adjacent strip, oriented so as to form a predetermined angle relative to a circumferential direction. On the radially outermost belt strip (106b) may optionally be applied at least one zero-degree reinforcing layer (106c), commonly known as a "0° belt", which generally incorporates a plurality of reinforcing cords, typically textile cords, arranged at an angle of a few degrees relative to a circumferential direction, and coated and welded together by means of a crosslinked elastomeric composition.

A side wall (108) is also applied externally onto the carcass ply (101), this side wall extending, in an axially external position, from the bead (103) to the end of the belt structure (106).

A tread band (109), which may be made according to the present invention, whose lateral edges are connected to the side walls (108), is applied circumferentially in a position radially external to the belt structure (106). Externally, the tread band (109) has a rolling surface (109a) designed to come into contact with the ground. Circumferential grooves which are connected by transverse notches (not represented in Fig. 1) so as to define a plurality of blocks of various shapes and sizes distributed over the rolling surface (109a) are generally made in this surface (109a), which is represented for simplicity in Fig. 1 as being smooth.

A tread underlayer (111) is placed between the belt structure (106) and the tread band (109).

As represented an Fig. 1, the tread underlayer (111) may have uniform thickness.

Alternatively, the tread underlayer (111) may have a variable thickness in the transversal direction. For example, the thickness may be greater near its outer edges than at a central zone.

In Fig. 1, said tread underlayer (111) extends over a surface substantially corresponding to the surface of development of said belt structure (106). Alternatively, said tread underlayer (111) extends only along at least one portion of the development of said belt structure (106), for instance at opposite side portions of said belt structure (106) (not represented in Fig. 1).

A strip made of elastomeric material (110), commonly known as a "mini-side wall", may optionally be present in the connecting zone between the side walls (108) and the tread band (109), this mini-side wall generally being obtained by co-extrusion with the tread band and allowing an improvement in the mechanical interaction between the tread band (109) and the side walls (108). Alternatively, the end portion of the side wall (108) directly covers the lateral edge of the tread band (109).

In the case of tubeless tires, a rubber layer (112) generally known as a liner, which provides the necessary impermeability to the inflation air of the tire, may also be provided in an inner position relative to the carcass ply (101).

The process for producing the tire according to the present invention may be carried out according to techniques and using apparatus that are known in the art, as described, for example, in European Patents EP 199,064, or in United States Patent US 4,872,822 or US 4,768,937, said process including manufacturing the crude tire, and subsequently moulding and vulcanizing the crude tire.

Although the present invention has been illustrated specifically in relation to a tire, other crosslinked elastomeric manufactured products that can be produced according to the invention may be, for example, conveyor belts, drive belts or hoses.

The present invention will be further illustrated below by means of a number of illustrative embodiments, which are given for purely indicative purposes and without any limitation of this invention.

### EXAMPLE 1 (comparative)

### Preparation of the activator by solution ion-exchange process

20.0 g of Cloisite^{®} Na⁺ (natural montmorillonite belonging to the smectite family from Southern Clay Products) and 1.6 1 of demineralised water were added to a 2 1 round bottomed flask and the mixture was heated at 50°C and maintained at this temperature, under mechanical stirring (300 rpm), for 1 hour. Subsequently, 2.4 g of zinc chloride dissolved in 50 ml of a ethanol/demineralised water solution (1:1 by volume) were added and the obtained mixture was maintained at 50°C, under mechanical stirring (300 rpm), for 4.5 hours. Subsequently, the mixture was cooled to room temperature (23°C) and was maintained, under mechanical stirring (300 rpm), at said temperature (23°C), for 30 minutes. Then, the stirring was stopped and the mixture was allowed to settle. The obtained sediment was filtered on a filter paper and was washed with a ethanol/demineralised water solution (1:1 by volume) to partially eliminate the excess of chloride anion from the filtrate. Subsequently, the obtained solid product was resuspended in 100 ml of demineralised water and dialyzed, for 12 hours, until the excess of chloride anion was totally eliminated (i.e. was undetectable by addition of silver nitrate) from the mixture. The obtained mixture was subsequently filtered on a filter paper and dried in air at 65°C, for 12 hours. 19.3 g of solid product were obtained having a zinc amount of 3.37% by weight with respect to the total weight of the obtained solid product.

The zinc amount was determined by Induction Coupled Plasma-Atomic Emission Spectroscopy (ICP-AES) operating as follows.

1 g of the solid product obtained as disclosed above, was added to a platinum crucible and heated at 1000°C up to the end of smoke evolution. Subsequently, the remaining solid product was cooled to room temperature (23°C) and 10 ml of a water/hydrochloric acid solution (10:1 by volume) were then added. The obtained suspension was heated in a water bath, at 100°C, subsequently filtered with a filter paper and washed, three times, with water. A 100 ml solution was obtained which was subsequently added to an Atomic Emission Spectrometer (model IRIS from Thermo Jarrel Ash) to determine the zinc content.

### EXAMPLE 2

### Preparation of the activator by dry comilling

25.0 g of Cloisite^{®} Na⁺ (natural montmorillonite belonging to the smectite family from Southern Clay Products) and 5.42 g of a mixture zinc octanoate/silica (75/25 wt/wt) were added to a 0.250 1 centrifugal ball-mill (model S100 from Retsch), loaded with 7 stainless steel balls having a diameter of 20.0 mm. The mixture was ground, for 2 hours, with a rotating speed of 440 rpm, at ambient temperature (23°C). 30.2 g of solid product were obtained having a zinc content of 2.45% by weight with respect to the total weight of the obtained solid product.

The zinc amount was determined by Induction Coupled Plasma-Atomic Emission Spectroscopy (ICP-AES) operating as disclosed above.

### EXAMPLE 3

### Preparation of the activator by dry comilling

25.0 g of Cloisite^{®} Na⁺ (natural montmorillonite belonging to the smectite family from Southern Clay Products) and 10.85 g of a mixture zinc octanoate/silica (75/25 wt/wt) were added to a 0.250 1 centrifugal ball-mill (model S100 from Retsch), loaded with 7 stainless steel balls having a diameter of 20.0 mm. The mixture was ground, for 2 hours, with a rotating speed of 440 rpm, at ambient temperature (23°C). 35.6 g of solid product were obtained having a zinc content of 4.21% by weight with respect to the total weight of the obtained solid product.

The zinc amount was determined by Induction Coupled Plasma-Atomic Emission Spectroscopy (ICP-AES) operating as disclosed above.

### EXAMPLE 4

### Preparation of the activator by dry comilling

32.0 g of Cloisite^{®} Na⁺ (natural montmorillonite belonging to the smectite family from Southern Clay Products) and 1.21 g of zinc oxide were added to a 0.250 1 centrifugal ball-mill (model S100 from Retsch), loaded with 7 stainless steel balls having a diameter of 20.0 mm. The mixture was ground, for 2 hours, with a rotating speed of 440 rpm, at ambient temperature (23°C). 33.1 g of solid product were obtained having a zinc content of 2.96% by weight with respect to the total weight of the obtained solid product.

The zinc amount was determined by Induction Coupled Plasma-Atomic Emission Spectroscopy (ICP-AES) operating as disclosed above.

### EXAMPLE 5

### Preparation of the activator by dry comilling

28.0 g of Cloisite^{®} Na⁺ (natural montmorillonite belonging to the smectite family from Southern Clay Products) and 1.77 g of zinc chloride were added to a 0.250 1 centrifugal ball-mill (model S100 from Retsch), loaded with 7 stainless steel balls having a diameter of 20.0 mm, The mixture was ground, for 2 hours, with a rotating speed of 440 rpm, at ambient temperature (23°C). 29.6 g of solid product were obtained having a zinc content of 2.90% by weight with respect to the total weight of the obtained solid product.

The zinc amount was determined by Induction Coupled Plasma-Atomic Emission Spectroscopy (ICP-AES) operating as disclosed above.

### EXAMPLE 6

### Preparation of the activator by dry comilling

25.0 g of Dellite^{®} HPS (natural montmorillonite belonging to the smectite family from Laviosa Chimica Mineraria S.p.A.) and 7.5 g of a mixture zinc octanoate/silica (75/25 wt/wt) were added to a 0.250 1 centrifugal ball-mill (model S100 from Retsch), loaded with 7 stainless steel balls having a diameter of 20.0 min. The mixture was ground, for 2 hours, with a rotating speed of 440 rpm, at ambient temperature (23°C). 32.3 g of solid product were obtained having a zinc ontent of 3.23% by weight with respect to the total weight of the obtained solid product.

The zinc amount was determined by Induction Coupled Plasma-Atomic Emission Spectroscopy (ICP-AES) operating as disclosed above.

### EXAMPLE 7

### Preparation of the activator by dry comilling

25.0 g of Dellite^{®} HPS (natural montmorillonite belonging to the smectite family from Laviosa Chimica Mineraria S.p.A.), 7.5 g of a mixture zinc octanoate/silica (75/25 wt/wt), and 1.02 g of dimethyl dihydrogenated tallow ammonium salt (from Akzo Nobel), were added to a 0.250 1 centrifugal ball-mill (model S100 from Retsch), loaded with 7 stainless steel balls having a diameter of 20.0 mm. The mixture was ground, for 2 hours, with a rotating speed of 440 rpm, at ambient temperature (23°C). 33.4 g of solid product were obtained having a zinc content of 3.13% by weight with respect to the total weight of the obtained solid product.

The zinc amount was determined by Induction Coupled Plasma-Atomic Emission Spectroscopy (ICP-AES) operating as disclosed above.

### EXAMPLES 8-13

### Preparation of the crosslinkable elastomeric compositions

The elastomeric compositions given in Table 1 were prepared as follows (the amounts of the various components are given in phr).

All the components, except sulfur and accelerator (TBBS), were mixed together in an internal mixer (model Pomini PL 1.6) for about 5 min (1^{st} Step). As soon as the temperature reached 145±5°C, the elastomeric material was discharged. The sulfur, retardant (PVI) and accelerator (DCBS), were then added and mixing was carried out in an open roll mixer (2^{nd} Step).

**TABLE 1**

| EXAMPLE | 8 (*) | 9 (*) | 10 | 11 | 12 | 13 |
|---|---|---|---|---|---|---|
| 1^{st} STEP | | | | | | |
| S-SBR | 137.5 | 137.5 | 137.5 | 137.5 | 137.5 | 137.5 |
| N375 | 60.0 | 60.0 | 60.0 | 60.0 | 60.0 | 60.0 |
| Stearic acid | 2.0 | 2.0 | 2.0 | 2.0 | 2.0 | 2.0 |
| Antioxidant | 2.0 | 2.0 | 2.0 | 2.0 | 2.0 | 2.0 |
| Aromatic oil | 10.0 | 10.0 | 10.0 | 10.0 | 10.0 | 10.0 |
| Zinc oxide | 3.0 (2.44) ** | - | - | - | - | - |
| Activator of Example 1 | - | 2.5 (0.084)** | - | - | - | - |
| Activator of Example 2 | - | - | 2.5 (0.062)** | - | - | - |
| Activator of Example 3 | - | - | - | 2.5 (0.106)** | - | |
| Activator of Example 4 | - | - | - | - | 2.5 (0.073)** | - |
| Activator of Example 5 | - | - | - | - | - | 2.5 (0.071)** |

| 2^{nd} STEP | | | | | | |
|---|---|---|---|---|---|---|
| TBBS | 1.5 | 1.5 | 1.5 | 1.5 | 1.5 | 1.5 |
| PVI | 0.3 | 0.3 | 0.3 | 0.3 | 0.3 | 0.3 |
| Sulfur | 1.75 | 1.75 | 1.75 | 1.75 | 1.75 | 1.75 |

| | | | | | | |
|---|---|---|---|---|---|---|
| (*): comparative; **: zinc content in phr. S-SBR: styrene/butadiene copolymer, obtained by solution polymerization, containing 25% by weight of styrene, mixed with 27.3 phr of oil (Buna^{®} VSL 5025-1-Lanxess); N375: carbon black; Antioxidant: phenyl-p-phenylenediamine; TBBS (accelerator): benzothiazyl-2-t-butyl-sulfenamide (Vulkacit^{®} NZ/EGC - Lanxess); Sulfur: soluble sulfur. | | | | | | |

Said crosslinkable elastomeric compositions were subjected to MDR rheometric analysis using a Monsanto MDR rheometer, the tests being carried out at 170°C for 20 minutes at an oscillation frequency of 1.66 Hz (100 oscillations per minute) and an oscillation amplitude of ± 0.5°. The obtained results are given in Table 2.

The static mechanical properties according to Standard ISO 37:1994 were measured on samples of the abovementioned elastomeric compositions vulcanized at 170°C for 10 min. The results obtained are given in Table 2.

Table 2 also shows the dynamic mechanical properties, measured using an Instron dynamic device in the traction-compression mode according to the following methods. A test piece of the crosslinked elastomeric composition (vulcanized at 170°C for 10 min) having a cylindrical form (length = 25 mm; diameter = 14 mm), compression-preloaded up to a 25% longitudinal deformation with respect to the initial length, and kept at the prefixed temperature (23°C or 70°C) for the whole duration of the test, was submitted to a dynamic sinusoidal strain having an amplitude of ±3.5% with respect to the length under pre-load, with a 100 Hz frequency. The dynamic mechanical properties are expressed in terms of dynamic elastic modulus (E') and Tan delta (loss factor) values. The Tan delta value is calculated as a ratio between viscous modulus (E") and elastic modulus (E').

**TABLE 2**

| EXAMPLE | 8 (*) | 9 (*) | 10 | 11 | 12 | 13 |
|---|---|---|---|---|---|---|
| MDR RHEOMETRIC ANALYSIS (10 min, 170°C) | | | | | | |
| TS1 (min) | 2.78 | 2.51 | 2.69 | 2.69 | 2.71 | 2.46 |
| TS2 (min) | 3.74 | 3.39 | 3.55 | 3.50 | 3.65 | 3.24 |
| T90 (min) | 10.93 | 10.94 | 12.70 | 11.62 | 10.90 | 12.63 |

| STATIC MECHANICAL PROPERTIES | | | | | | |
|---|---|---|---|---|---|---|
| 100% Modulus (CA1) (MPa) | 1.70 | 1.44 | 1.57 | 1.55 | 1.73 | 1.60 |
| 300% Modulus (CA3) (MPa) | 8.37 | 6.55 | 7.80 | 7.65 | 8.61 | 7.83 |
| CA3/CA1 | 4.92 | 4.55 | 4.97 | 4.94 | 4.98 | 4.89 |
| Stress at break (MPa) | 16.67 | 15.80 | 17.00 | 16.50 | 16.30 | 16.25 |
| Elongation at break (%) | 557.10 | 540.80 | 574.00 | 550.30 | 530.00 | 552.90 |

| DYNAMIC MECHANICAL PROPERTIES | | | | | | |
|---|---|---|---|---|---|---|
| E' (23°C) | 7.487 | 7.250 | 7.045 | 7.013 | 7.476 | 7.247 |
| E' (70°C) | 3.947 | 3.510 | 3.817 | 3.783 | 3.862 | 3.875 |
| Tan delta (23°C) | 0.519 | 0.510 | 0.513 | 0.500 | 0.513 | 0.507 |
| Tan delta (70°C) | 0.219 | 0.240 | 0.225 | 0.227 | 0.232 | 0.227 |

| | | | | | | |
|---|---|---|---|---|---|---|
| (*): comparative. | | | | | | |

### EXAMPLES 14-16

### Preparation of the crosslinkable elastomeric compositions

The elastomeric compositions given in Table 3 were prepared as follows (the amounts of the various components are given in phr).

All the components, except sulfur and accelerators (CBS and DPG), were mixed together in an internal mixer (model Pomini PL 1.6) for about 5 min (1^{st} Step). As soon as the temperature reached 145±5°C, the elastomeric material was discharged. The sulfur and accelerators (CBS and DPG), were then added and mixing was carried out in an open roll mixer (2^{nd} Step).

**TABLE 3**

| EXAMPLE | 14 (*) | 15 | 16 |
|---|---|---|---|
| 1^{st} STEP | | | |
| S-SBR | 90.0 | 90.0 | 90.0 |
| BR | 35.0 | 35.0 | 35.0 |
| X50S^{®} | 11.2 | 11.2 | 11.2 |
| Silica | 70.0 | 70.0 | 70.0 |
| Stearic acid | 2.0 | 2.0 | 2.0 |
| Microcrystalline wax | 1.0 | 1.0 | 1.0 |
| Aromatic oil | 8.0 | 8.0 | 8.0 |
| Antioxidant | 2.0 | 2.0 | 2.0 |
| Zinc oxide | 2.5 (2.0)** | - | - |
| Activator of Example 6 | - | 2.5 (0.080)** | - |
| Activator of Example 7 | - | - | 2.5 (0.078)** |

| 2^{nd} STEP | | | |
|---|---|---|---|
| CBS | 2.0 | 2.0 | 2.0 |
| DPG | 2.4 | 2.4 | 2.4 |
| Sulfur | 1.2 | 1.2 | 1.2 |

| | | | |
|---|---|---|---|
| (*): comparative: **: zinc content in phr. S-SBR: styrene/butadiene copolymer, obtained by solution polymerization, containing 25% by weight of styrene, mixed with 27.3 phr of oil (Buna^{®} VSL 5025-1 - Lanxess); BR: cis-1,4-polybutadiene (Europrene^{®} Neocis BR40 - Polimeri Europa) ; X50S^{®}: silane coupling agent comprising 50% by weight of carbon black and 50% by weight of bis(3-triethoxysilylpropyl) tetrasulphide (Degussa-Hüls - the reported amount relates to the total amount of silane + carbon black); Silica: precipitated silica (Zeosil^{®} 1165 MP - Rhone-Poulenc); Antioxidant: phenyl-p-phenylenediamine; CBS (accelerator): N-cyclohexyl-2-benzothiazyl sulphenamide (Vulkacit^{®} CZ - Bayer); DPG (accelerator): diphenylguanidine (Vulkacit^{®} D - Bayer); Sulfur: soluble sulfur. | | | |

Said crosslinkable elastomeric compositions were subjected to MDR rheometric analysis using a Monsanto MDR rheometer, the tests being carried out at 170°C for 20 minutes at an oscillation frequency of 1.66 Hz (100 oscillations per minute) and an oscillation amplitude of ± 0.5°. The obtained results are given in Table 4.

The static mechanical properties according to Standard ISO 37:1994 were measured on samples of the abovementioned elastomeric compositions vulcanized at 170°C for 10 min. The results obtained are given in Table 4.

Table 4 also shows the dynamic mechanical properties, measured using an Instron dynamic device in the traction-compression mode according to the following methods. A test piece of the crosslinked elastomeric composition (vulcanized at 170°C for 10 min) having a cylindrical form (length = 25 mm; diameter = 14 mm), compression-preloaded up to a 25% longitudinal deformation with respect to the initial length, and kept at the prefixed temperature (23°C or 70°C) for the whole duration of the test, was submitted to a dynamic sinusoidal strain having an amplitude of ±3.5% with respect to the length under pre-load, with a 100 Hz frequency. The dynamic mechanical properties are expressed in terms of dynamic elastic modulus (E') and Tan delta (loss factor) values. The Tan delta value is calculated as a ratio between viscous modulus (E") and elastic modulus (E').

Table 4 also show the DIN abrasion: the data (expressed in mm³) correspond to the amount of elastomeric composition removed by operating under the standard conditions given in DIN standard 53516.

**TABLE 4**

| EXAMPLE | 13 (*) | 14 | 15 |
|---|---|---|---|
| MDR RHEOMETRIC ANALYSIS (10 min, 170°C) | | | |
| TS1 (min) | 1.20 | 0.95 | 0.95 |
| TS2 (min) | 1.77 | 1.21 | 1.20 |
| T90 (min) | 5.32 | 5.51 | 5.74 |

| STATIC MECHANICAL PROPERTIES | | | |
|---|---|---|---|
| 100% Modulus (CA1) (MPa) | 2.01 | 2.11 | 2.19 |
| 300% Modulus (CA3) (MPa) | 8.73 | 8.97 | 9.41 |
| CA3/CA1 | 4.34 | 4.24 | 4.29 |
| Stress at break (MPa) | 14.31 | 16.24 | 14.80 |
| Elongation at break (%) | 455.12 | 490.33 | 445.86 |

| DYNAMIC MECHANICAL PROPERTIES | | | |
|---|---|---|---|
| E' (23°C) | 7.762 | 8.732 | 8.477 |
| E' (70°C) | 5.800 | 6.072 | 5.908 |
| Tan delta (23°C) | 0.257 | 0.267 | 0.266 |
| Tan delta (70°C) | 0.138 | 0.142 | 0.145 |
| Abrasion (mm³) | 85.1 | 77.2 | 74.6 |

| | | | |
|---|---|---|---|
| (*): comparative.. | | | |

## Claims

1. Tire comprising at least one structural element including a crosslinked elastomeric material obtained by crosslinking a crosslinkable elastomeric composition comprising:
(a) at least one diene elastomeric polymer;
(b) at least one activator obtained by dry comilling a mixture comprising:
- at least one salt, or one oxide, or one hydroxide of a metal belonging to groups 2, 3, 4, 5, 6, 7, 8, 9, 10, 11, 12, 13, 14, 15, or 16 of the Periodic Table of the Elements; and
- at least one layered material, said layered material having an individual layer thickness of from 0.01 nm to 30 nm;
(c) at least one vulcanization accelerator;
(d) sulfur or derivatives thereof.

2. Tire according to claim 1, wherein said at least one activator (b) is obtained by dry comilling a mixture comprising:
- at least one salt, or one oxide, or one hydroxide of a metal belonging to groups 2, 3, 4, 5, 6, 7, 8, 9, 10, 11, 12, 13, 14, 15, or 16 of the Periodic Table of the Elements;
- at least one layered material, said layered material having an individual layer thickness of from 0.01 nm to 30 nm; and
- at least one alkyl ammonium or alkyl phosphonium salt.

3. Tire according to claim 1, wherein said at least one activator (b) is obtained by dry comilling a mixture comprising:
- at least one salt, or one oxide, or one hydroxide of a metal belonging to groups 2, 3, 4, 5, 6, 7, 8, 9, 10, 11, 12, 13, 14, 15, or 16 of the Periodic Table of the Elements;
- at least one layered material modified with at least one alkyl ammonium or alkyl phosphonium salt, said layered material having an individual layer thickness of from 0.01 nm to 30 nm.

4. Tire according to any one of the preceding claims, wherein said at least one layered material has an individual layer thickness of from 0.05 nm to 15 nm.

5. Tire according to claim 4, wherein said at least one layered material has an individual layer thickness of from 0.1 nm to 2 nm.

6. Tire according to any one of the preceding claims wherein said crosslinkable elastomeric composition is substantially free of heavy metal compounds.

7. Tire according to claim 6 wherein said heavy metal compounds are zinc compounds.

8. Tire according to any one of the preceding claims, wherein said metal belonging to groups 2, 3, 4, 5, 6, 7, 8, 9, 10, 11, 12, 13, 14, 15, or 16 of the Periodic Table of the Elements is selected from:
- alkaline-earth metals such as calcium, magnesium, or mixtures thereof;
- transition metals such as zinc, cobalt, nickel, iron, molybdenum, manganese, chromium, cerium, or mixtures thereof;
- main group metals such as tin, antimony, or mixtures thereof;
or mixtures thereof.

9. Tire according to claim 8, wherein said metal is zinc.

10. Tire according to any one of the preceding claims, wherein said diene elastomeric polymer (a) has a glass transition temperature (T_{g}) below 20°C.

11. Tire according to claim 10, wherein said diene elastomeric polymer (a) is selected from: natural or synthetic cis-1,4-polyisoprene, 3,4-polyisoprene, polybutadiene, optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

12. Tire according to any one of the preceding claims, wherein said crosslinkable elastomeric composition comprises (a') at least one elastomeric polymer of one or more monoolefins with an olefinic comonomer or derivatives thereof.

13. Tire according to claim 12, wherein said elastomeric polymer (a') is selected from: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

14. Tire according to any one of the preceding claims, wherein said salt of a metal belonging to groups 2, 3, 4, 5, 6, 7, 8, 9, 10, 11, 12, 13, 14, 15 or 16 of the Periodic Table of the Elements, is selected from organic or inorganic metal salts, or mixtures thereof.

15. Tire according to claim 14, wherein said organic metal salts are selected from: zinc octanoate, zinc stearate, zinc naphtenate, cobalt naphthenate, nickel naphthenate, nickel octanoate, cerium octanoate, molybdenum octanoate, cobalt propionate, nickel propionate, iron octanoate, nickel stearate, magnesium stearate, magnesium acetate, magnesium acetilacetonate, calcium stearate, calcium laurate, calcium stearoyl-lactate, or mixtures thereof.

16. Tire according to claim 15, wherein said organic metal salt is zinc octanoate.

17. Tire according to claim 14, wherein said inorganic metal salts are selected from: zinc chloride, cobalt carbonate, zinc carbonate hydroxide hydrate, iron carbonate, lead carbonate, magnesium methyl carbonate, magnesium ethyl carbonate, magnesium isopropyl carbonate, iron sulphate, or mixtures thereof.

18. Tire according to claim 17, wherein said inorganic metal salt is zinc chloride.

19. Tire according to any one of the preceding claims, wherein said oxide of a metal belonging to groups 2, 3, 4, 5, 6, 7, 8, 9, 10, 11, 12, 13, 14, 15, or 16 of the Periodic Table of the Elements is selected from: calcium oxide, magnesium oxide, zinc oxide, cobalt oxide, cerium oxide, molybdenum oxide, manganese oxide, iron oxide, or mixtures thereof.

20. Tire according to claim 19, wherein said oxide is zinc oxide.

21. Tire according to any one of the preceding claims, wherein said hydroxide of a metal belonging to groups 2, 3, 4, 5, 6, 7, 8, 9, 10, 11, 12, 13, 14, 15, or 16 of the Periodic Table of the Elements is selected from: zinc hydroxide, cobalt hydroxide, magnesium hydroxide, calcium hydroxide, or mixtures thereof.

22. Tire according to claim 21, wherein said hydroxide is zinc hydroxide.

23. Tire according to any one of the preceding claims, wherein said layered material is selected from: phyllosilicates such as, smectites, such as, montmorillonite, bentonite, nontronite, beidellite, volkonskoite, hectorite, saponite, sauconite; vermiculite; halloisite; sericite; aluminate oxides; hydrotalcite; or mixtures thereof.

24. Tire according to any one of the preceding claims, wherein said activator (b) is present in the crosslinkable elastomeric composition in an amount of from 1 phr to 8 phr.

25. Tire according to claim 24, wherein said activator (b) is present in the crosslinkable elastomeric composition in an amount preferably of from 1.5 phr to 5 phr.

26. Tire according to any one of the preceding claims, wherein said activator (b) is present in the crosslinkable elastomeric composition in an amount such that the amount of metal present in said crosslinkable elastomeric composition is of from 0.01 phr to 1.0 phr.

27. Tire according to claim 26, wherein said activator (b) is present in the crosslinkable elastomeric composition in an amount such that the amount of metal present in said crosslinkable elastomeric composition is of from 0.02 phr to 0.5 phr.

## Patentansprüche

1. Reifen, der mindestens ein Strukturelement umfasst, das ein vernetztes elastomeres Material einschließt, das durch Vernetzen einer vernetzbaren elastomeren Zusammensetzung erhalten wurde, die umfasst :
(a) mindestens ein elastomeres Dien-Polymer;
(b) mindestens einen Aktivator, erhalten durch trockenes gemeinsames Vermahlen einer Mischung, die umfasst :
- mindestens ein Salz oder ein Oxid oder ein Hydroxid eines Metalls, das zu den Gruppen 2, 3, 4, 5, 6, 7, 8, 9, 10, 11, 12, 13, 14, 15 oder 16 des Periodensystems der Elemente gehört; und
- mindestens ein Schichtmaterial, wobei das Schichtmaterial eine Einzelschichtdicke von 0,01 bis 30 nm hat;
(c) mindestens einen Vulkanisationsbeschleuniger;
(d) Schwefel oder Derivate davon.

2. Reifen gemäß Anspruch 1, in dem der mindestens eine Aktivator (b) erhalten wurde durch trockenes gemeinsames Vermahlen einer Mischung, die umfasst :
- mindestens ein Salz oder ein Oxid oder ein Hydroxid eines Metalls, das zu den Gruppen 2, 3, 4, 5, 6, 7, 8, 9, 10, 11, 12, 13, 14, 15 oder 16 des Periodensystems der Elemente gehört;
- mindestens ein Schichtmaterial, wobei das Schichtmaterial einer Einzelschichtdicke von 0,01 bis 30 nm hat; und
- mindestens ein Alkylammonium- oder Alkylphosphoniumsalz.

3. Reifen gemäß Anspruch 1, in dem der mindestens eine Aktivator (b) erhalten wurde durch trockenes gemeinsames Vermahlen einer Mischung, die umfasst:
- mindestens ein Salz oder ein Oxid oder ein Hydroxid eines Metalls, das zu den Gruppen 2, 3, 4, 5, 6, 7, 8, 9, 10, 11, 12, 13, 14, 15 oder 16 des Periodensystems der Elemente gehört ;
- mindestens ein Schichtmaterial, das mit mindestens einem Alkylammonium- oder Alkylphosphoniumsalz modifiziert ist, wobei das Schichtmaterial eine Einzelschichtdicke von 0,01 bis 30 nm hat,

4. Reifen gemäß mindestens einem der vorhergehenden Ansprüche, in dem das mindestens eine Schichtmaterial eine Einzelschichtdicke von 0,05 bis 15 nm hat.

5. Reifen gemäß Anspruch 4, in dem das mindestens eine Schichtmaterial eine Einzelschichtdicke von 0,1 bis 2 nm hat.

6. Reifen gemäß mindestens einem der vorhergehenden Ansprüche, in dem die vernetzbare elastomere Zusammensetzung im wesentlichen frei ist von Schwermetallverbindungen.

7. Reifen gemäß Anspruch 6, in dem die Schwermetallverbindungen Zinkverbindungen sind.

8. Reifen gemäß mindestens einem der vorhergehenden Ansprüche, in dem das Metall, das zu den Gruppen 2, 3, 4, 5, 6, 7, 8, 9, 10, 11, 12, 13, 14, 15 oder 16 des Periodensystems der Elemente gehört, ausgewählt ist aus:
- Erdalkalimetallen, wie Calcium, Magnesium oder Mischungen davon;
- Übergangsmetallen, wie Zink, Kobalt, Nickel, Eisen, Molybdän, Mangan, Chrom, Cer oder Mischungen davon:
- Hauptgruppenmetallen, wie Zinn, Antimon oder Mischungen davon;
oder Mischungen davon.

9. Reifen gemäß Anspruch 8, in dem das Metall Zink ist.

10. Reifen gemäß mindestens einem der vorhergehenden Ansprüche, in dem das elastomere Dien-Polymer (a) eine Glasübergangstemperatur (T_{g}) unter 20°C hat.

11. Reifen gemäß Anspruch 10, in dem das elastomere Dien-Polymer (a) ausgewählt ist aus: natürlichem oder synthetischem CiS-1,4,-Polyisopren, 3,4-Polyisopren, Polybutadien, optional haloganierten Isopren/Isobuten-Copolymeren, 1,3-Butadien/Acrylnitril-Copolymeren, Styrol/1,3-Butadien-Copolymeren, Styrol/Isopren/1,3-Butadien-Copolymeren, Styrol/1,3-Butadien/Acrylnitril-Copolymeren oder Mischurgen davon.

12. Reifen gemäß mindestens einem der vorhergehenden Ansprüche, in dem die vernetzbare elastomere Zusammensetzung (a') mindestens ein elastomeres Polymer von einem oder mehreren Monoolefinen mit einem olefinischen Comonomer oder Derivaten davon umfasst.

13. Reifen gemäß Anspruch 12, in dem das elastomere Polymer (a') ausgewählt ist aus Ethylen/Propylen-Copolymeren (EFR) oder Ethylen/Propylen/Dien-Copolymeren (EPDM); Polyisobuten; Butylkautschuken; Halogenbutylkautschuken, insbesondere Chlorbutyl- oder Brombutylkautschuken; oder Mischungen davon.

14. Reifen gemäß mindestens einem der vorhergehenden Ansprüche, in dem das Salz eines Metalls, das zu den Gruppen 2, 3, 4, 5, 6, 7, 8, 9, 10, 11, 12, 13, 14, 15 oder 16 des Periodensystems der Elemente gehört, ausgewählt ist aus organischen oder anorganischen Metallsalnen oder Mischungen davon.

15. Reifen gemäß Anspruch 14, in dem die organischen Metallsalze ausgewählt sind aus: Zinkoctanoat, Zinkstearat, Zinknaphthenat, Kobaltnaphthenat, Nickelnaphthenat, Nickeloctanoat, Ceroctanoat, Molybdänoctanoat, Kobaltpropionat, Nickelpropionat, Eisenoctanoat, Nickelstearat, Magnesiumstearat, Magnesiumacetat, Magnesiumacetylacetonat, Calciumstearat, Calciumlaurat, Calciumstearoyl-Lactat; oder Mischungen davon.

16. Reifen gemäß Anspruch 15, in dem das organische Metallsalz Zinkoctanoat ist.

17. Reifen gemäß Anspruch 14, in dem die anorganischen Metallsalze ausgewählt sind aus: Zinkchlorid, Kobaltcarbonat, Zinkcarbonathydroxidhydrat, Eisencarbonat, Bleicarbonat, Magnesiummethylcarbonat, Magnesiumethylcarbonat, Magnesiumisopropylcarbonat, Eisensulfat, oder Mischungen davon.

18. Reifen gemäß Anspruch 17, in dem das anorganische Metallsalz Zinkchlorid ist.

19. Reifen gemäß mindestens einem der vorhergehenden Ansprüche, in dem das Oxid eines Metalls, das zu den Gruppen 2, 3, 4, 5, 6, 7, 8, 9, 10, 11, 12, 13, 14, 15 oder 16 des Periodensystems der Elemente gehört, ausgewählt ist aus. Calciumoxid, Magnesiumoxid, Zinkoxid, Kobaltoxid, Ceroxid, Molybdänoxid, Manganoxid, Eisenoxid oder Mischungen davon.

20. Reifen gemäß Anspruch 19, in dem das Oxid Zinkoxid ist.

21. Reifen gemäß mindestens einem der vorhergehenden Ansprüche, in dem das Hydroxid eines Metalls, das zu den Gruppen 2, 3, 4, 5, 6, 7, 8, 9, 10, 11, 12, 13, 14, 15 oder 16 des Periodensystems der Elemente gehört, ausgewählt ist aus Zinkhydroxid, Kobalthydroxid, Magnesiumhydroxid, Calciumhydroxid oder Mischungen davon.

22. Reifen gemäß Anspruch 21, in dem das Hydroxid Zinkhydroxid ist.

23. Reifen gemäß mindestens einem der vorhergehenden Ansprüche, in dem das Schichtmaterial ausgewählt ist aus: Phyllosilikaten, wie Smectiten, wie Montmorillonit, Bentonit, Nontronit, Beidellit, Volkonskoit, Hectorit, Saponit, Sauconit; Vermiculit; Halloisit; Sericit; Aluminatoxiden; Hydrotalcit; oder Mischungen davon.

24. Reifen gemäß mindestens einem der vorhergehenden Ansprüche, in dem der Aktivator (b) in der vernetzbaren elastomeren Zusammensetzung in einer Menge von 1 bis 8 phr vorliegt.

25. Reifen gemäß Anspruch 24, in dem Aktivator (b) in der vernetzberen elastomeren Zusammensetzung in einer Menge von vorzugsweise 1,5 bis 5 phr vorliegt.

26. Reifen gemäß mindestens einem der vorhergehenden Ansprüche, in dem der Aktivator (b) in einer solchen Menge in der vernetzbaren elastomeren Zusammensetzung vorliegt, dass die Menge Metall, die in der vernetzbaren elastomeren Zusammensetzung vorliegt, von 0,01 bis 1,0 phr ist.

27. Reifen gemäß Anspruch 26, in dem Aktivator (b) in einer solchen Menge in der vernetzbaren elastomeren Zusammensetzung vorliegt, dass die Menge Metall, die in der vernetzbaren elastomeren Zusummensetzung vorliegt, von 0,00 bis 0,5 phr ist.

## Revendications

1. Pneu comportant au moins un élément structurel comprenant un matériau élastomère réticulé obtenu par réticulation d'une composition élastomère réticulable comprenant:
(a) au moins un polymère élastomère diénique;
(b) au moins un activateur obtenu par broyage à sec d'un mélange comprenant:
- au moins un sel, ou un oxyde, ou un hydroxyde d'un métal appartenant aux groupes 2, 3, 4, 5, 6, 7, 8, 9, 10, 11, 12, 13, 14, 15 ou 16 du Tableau Périodique des Eléments, et
- au moins un matériau en couches, ce matériau en couches ayant une épaisseur de couche individuelle de 0,01 nm à 30 nm;
(c) au moins un accélérateur de vulcanisation, et
(d) du soufre ou un de ses dérivés.

2. Pneu selon la revendication 1, dans lequel au moins un activateur (b) est obtenu par broyage à sec d'un mélange comprenant:
- au moins un sel, ou un oxyde, ou un hydroxyde d'un métal appartenant aux groupes 2, 3, 4, 5, 6, 7, 8, 9, 10, 11, 12, 13, 14, 15 ou 16 du Tableau Périodique des Eléments;
- au moins un matériau en couches, ledit matériau en couches ayant une épaisseur de couche individuelle de 0,01 nm à 30 nm, et
- au moins un alkyle d'ammonium ou de sel de phosphonium alkyle.

3. Pneu selon la revendication 1, dans lequel au moins un activateur (b) est obtenu par broyage à sec un mélange comprenant:
- au moins un sel, ou un oxyde, ou un hydroxyde d'un métal appartenant aux groupes 2, 3, 4, 5 , 6, 7, 8, 9, 10, 11, 12, 13, 14, 15 ou 16 du Tableau Périodique des Eléments,
- au moins un matériau en couches modifié avec au moins un alkyle d'ammonium ou un sel de phosphonium alkyle, ledit matériau en couches ayant une épaisseur de couche individuelle de 0,01 nm à 30 nm.

4. Pneu selon l'une quelconque des revendications précédentes, dans lequel au moins un matériau en couches a une épaisseur de couche individuelle de 0,05 nm à 15 nm.

5. Pneu selon la revendication 4, dans lequel au moins un matériau en couches a une épaisseur de couche individuelle de 0,1 nm à 2 nm.

6. Pneu selon l'une quelconque des revendications précédentes, dans lequel ladite composition élastomère réticulable est sensiblement exempte de composés de métaux lourds.

7. Pneu selon la revendication 6, dans lequel lesdits composés de métaux lourds sont des composés de zinc.

8. Pneu selon l'une quelconque des revendications précédentes, dans lequel ledit métal appartenant aux groupes 2, 3, 4, 5, 6, 7, 8, 9, 10, 11, 12, 13, 14, 15 ou 16 du Tableau Périodique des Eléments est choisi parmi:
- les métaux alcalino-terreux tels que le calcium, le magnésium, ou des mélanges de ceux-ci;
- métaux de transition tels que le zinc, le cobalt, le nickel, le fer, le molybdène, le manganèse, le chrome, le cérium, ou des mélanges de ceux-ci;
- des métaux du groupe principal tels que l'étain, l'antimoine, ou des mélanges de ceux-ci;
ou des mélanges de ceux-ci.

9. Pneu selon la revendication 8, dans lequel ledit métal est le zinc.

10. Pneu selon l'une quelconque des revendications précédentes, dans lequel polymère élastomère diénique (a) a une température de vitrification (Tg) inférieure à 20°C.

11. Pneu selon la revendication 10, dans lequel polymère élastomère diénique (a) est sélectionné parmi: polyisoprène 1,4-cis naturel ou synthétique, polyisoprène 3,4, polybutadiène, copolymères isoprène/isobutène optionnellement halogénés, copolymères butadiène 1,3/acrylonitrile, copolymères styrène/butadiène 1,3, copolymères styrène/isoprène/butadiène 1,3, copolymères styrène/butadiène 1,3/acrylonitrile, ou des mélanges de ceux-ci.

12. Pneu selon l'une quelconque des revendications précédentes, dans lequel ladite composition élastomère réticulable comprend (a') au moins un polymère élastomère d'un ou plusieurs monooléfines avec un comonomère oléfinique ou leurs dérivés.

13. Pneu selon la revendication 12, dans lequel ledit polymère élastomère (a ') est choisi parmi: copolymères éthylène/propylène (EPR) ou copolymères éthylène/propylène/diène (EPDM); polyisobutène, gommes butyle; gommes halobutyle, en particulier chlorobutyle ou gommes bromobutyle; ou des mélanges de ceux-ci.

14. Pneu selon l'une quelconque des revendications précédentes, dans lequel ledit sel d'un métal appartenant aux groupes 2, 3, 4, 5, 6, 7, 8, 9, 10, 11, 12, 13, 14, 15 ou 16 du Tableau Périodique des Eléments, est choisi parmi les sels métalliques organiques ou inorganiques, ou des mélanges de ceux-ci.

15. Pneu selon la revendication 14, dans lequel lesdits sels métalliques organiques sont choisis parmi: octanoate de zinc, stéarate de zinc, naphténate de zinc, naphténate de cobalt, naphténate de nickel, octanoate de nickel, l'octanoate de cérium, l'octanoate de molybdène, propionate de cobalt, propionate de nickel, octanoate de fer, stéarate de nickel, stéarate de magnésium, acétate de magnésium, acetilacetonate de magnésium, stéarate de calcium, laurate de calcium, stéaroyl-lactate de calcium, ou des mélanges de ceux-ci.

16. Pneu selon la revendication 15, dans lequel ledit sel de métal organique est l'octanoate de zinc.

17. Pneu selon la revendication 14, dans lequel lesdits sels métalliques inorganiques sont choisis parmi: chlorure de zinc, carbonate de cobalt, hydrate hydroxyde carbonate de zinc, carbonate de fer, carbonate de plomb, carbonate méthyle de magnésium, carbonate magnésium d'éthyle, carbonate isopropyle de magnésium, sulfate de fer, ou des mélanges ceux-ci.

18. Pneu selon la revendication 17, dans lequel ledit sel métallique inorganique est le chlorure de zinc.

19. Pneu selon l'une quelconque des revendications précédentes, dans lequel ledit oxyde d'un métal appartenant aux groupes 2, 3, 4, 5, 6, 7, 8, 9, 10, 11, 12, 13, 14, 15 ou 16 du Tableau Périodique des Eléments est sélectionné parmi: oxyde de calcium, oxyde de magnésium, oxyde de zinc, oxyde de cobalt, oxyde de cérium, oxyde de molybdène, oxyde de manganèse, oxyde de fer, ou des mélanges ceux-ci.

20. Pneu selon la revendication 19, dans lequel ledit oxyde est l'oxyde de zinc.

21. Pneu selon l'une quelconque des revendications précédentes, dans lequel ledit hydroxyde d'un métal appartenant aux groupes 2, 3, 4, 5, 6, 7, 8, 9, 10, 11, 12, 13, 14, 15 ou 16 du Tableau Périodique des Eléments est sélectionné parmi: hydroxyde de zinc, hydroxyde de cobalt, hydroxyde de magnésium, hydroxyde de calcium, ou des mélanges de ceux-ci.

22. Pneu selon la revendication 21, dans lequel ledit hydroxyde est l'hydroxyde de zinc.

23. Pneu selon l'une quelconque des revendications précédentes, dans lequel ledit matériau en couches est choisi parmi: phyllosilicates tels que, smectites, tels que, montmorillonite, bentonite, nontronite, beidellite, volkonskoite, hectorite, saponite, sauconite; vermiculite; halloisite; séricite, oxydes d'aluminate; hydrotalcite, ou des mélanges de ceux-ci.

24. Pneu selon l'une quelconque des revendications précédentes, dans lequel ledit activateur (b) est présent dans la composition élastomère réticulable à hauteur de 1 phr à 8 phr.

25. Pneu selon la revendication 24, dans lequel ledit activateur (b) est présent dans la composition élastomère réticulable pour à hauteur de 1,5 phr à 5 phr.

26. Pneu selon l'une quelconque des revendications précédentes, dans lequel ledit activateur (b) est présent dans la composition élastomère réticulable dans une quantité telle que la quantité de métal présent dans ladite composition élastomère réticulable est de 0,01 phr à 1,0 phr.

27. Pneu selon la revendication 26, dans lequel ledit activateur (b) est présent dans la composition élastomère réticulable dans une quantité telle que le métal présent dans ladite composition élastomère réticulable est de 0,02 phr à 0,5 phr.
